# EUROPEAN PATENT SPECIFICATION

(11) **EP 0 299 766 B1**
(45) Date of publication and mention of the grant of the patent: **20.01.1993**
(21) Application number: 88306452.9
(22) Date of filing: 14.07.1988
(51) Int. Cl.: B60C 11/04, B60C 11/11

(54) **Pneumatic tyre**
Luftreifen
Pneumatique

(30) Priority: 15.07.1987 JP 176826/87; 22.07.1987 JP 184565/87
(43) Date of publication of application: 18.01.1989
(73) Proprietor: SUMITOMO RUBBER INDUSTRIES LIMITED, Chuo-ku Kobe-shi Hyogo 651 (JP)
(72) Inventor: Kojima, Yoshihide, Takarazuka-shi Hyogo-ken (JP); Hasegawa, Hirotsugu, Kakogawa-shi Kyogo-ken (JP)
(74) Representative: Stewart, Charles Geoffrey

(56) References cited:
- EP-A- 0 175 829
- US-A- 4 456 046

## Description

The present invention relates to a pneumatic tyre with a low aspect ratio, which has high mobility on a wet road surface as well as on a dry road surface. It is particularly suitable for use as a racing car tyre.

In a tyre mounted on high speed cars having a large horsepower such as racing cars, it is necessary to provide high steerability and cornering power as well as high speed durability even on wet road surface with rain or a wet road surface where a water film exists because of stagnant rain-water as well as on a dry road surface. Moreover a high resistance to hydroplaning is also required so as to prevent so called aquaplaning, a phenomenon where tyres running at high speed are hydrodynamically lifted due to the water film on the road surface.

In general, on a dry road surface, both the steering stability and high speed durability can be improved by increasing transverse stiffness by making the aspect ratio of the tyre low and making the tread width wider. In order to further improve these performance effects, it is preferable to provide a tyre as a slick tyre. In such slick tyres, however a water film is easily formed beneath the ground contacting surface because the tread width is large and the ground contact area is large, so that the resistance to aquaplaning becomes poor. Furthermore, the tyre, when running on a wet road surface is required to have a good transverse grip performance in cornering in addition to the above mentioned resistance to aquaplaning in straight running.

As described above, in a low aspect ratio tyre especially for racing it is desired to improve wet performance such as resistance to aquaplaning and transverse grip on a wet road surface in addition to good performance on a dry road surface.

By employing such a tyre satisfying these demands, it becomes possible to continue a long race without tyre change when it rains.

It has already been suggested to use a low aspect ratio tyre provided with longitudinal grooves and straight transverse grooves having a large groove volume and inclined with regard to the tyre equator to improve the wet performance.

A tyre having features according to the preamble of claim 1 is disclosed by the patent document US-A-4456046.

In such conventional tyres, however, though the wet performance could be raised to a certain degree, the steering stability, traction performance and cornering performance on dry road surface tended to be excessively lowered, and therefore good tyres satisfying both dry and wet performance could not be obtained.

It is therefore, a primary object of the present invention to provide a pneumatic tyre capable of satisfying the above mentioned contradictory dry performance and wet performance.

According to one aspect of the present invention a pneumatic tyre having an aspect ratio of 0.7 or less and a tread provided with three longitudinal grooves and transverse grooves on either side of the tyre equator, said transverse grooves being arranged in the circumferential direction of the tyre, said six longitudinal grooves extending circumferentially and parallel to the tyre equator and including first, second and third longitudinal grooves arranged axially outwardly in that order from the tyre equator, on either side each transverse groove extending continuously from axially inward of said first longitudinal groove toward and beyond said third longitudinal groove and having an extending portion up to the first longitudinal groove, an internal portion between said first and second longitudinal grooves, and intermediate portion between said second and third longitudinal grooves and an external portion between said third longitudinal groove and the edge of said tread, so as to form, on either side of the tyre equator, a row of internal blocks between said first and second longitudinal grooves, a row of intermediate blocks between said second and third longitudinal grooves, and a row of external blocks between said third longitudinal groove and the edge of said tread, each transverse groove being inclined with respect to the tyre equator, and the angle between said intermediate portion and said second longitudinal groove being larger than the angle between said internal portion and said first longitudinal groove and smaller than the angle between said external portion and said third longitudinal groove, and the angle between the extending portion and the first longitudinal groove being smaller than said angle, characterised in that the transverse grooves form groups in which the inclinations of a groove are different from those of any other groove of that group, and the angles formed by the portions of a transverse groove are larger than the respective angles of the next ranked groove having smaller inclinations and smaller than the respective angles of the previous ranked groove having larger inclinations of that group, if any.

Preferably, the surface area SB2 of the intermediate block B2, between the adjacent two transverse grooves, is larger than the surface area SB1 of the internal block B1 and smaller than the surface area SB3 of the external block B3.

Some embodiments of the present invention will be now explained in detail by way of example only, referring to the drawings: in which:-
Fig.1. is a sectional view showing an embodiment of the present invention
Fig.2 is a plan view showing the tread thereof:
Fig.3. is a plan view showing another embodiment of the present invention
Figs. 4 and 5 are sketches showing the shapes of ground contact area:
Figs 6 and 7 are graphs showing the relation between the groove position of the longitudinal grooves and anti aquaplaning performance
Fig.8 is a graph showing the relation between the groove width and anti-aquaplaning performance
Fig.9 is a graph showing the relation between the groove width and cornering performance
Fig.10 is a graph showing the relation between the inclination of the transverse groove and anti aquaplaning performance and
Fig.11 is a graph showing the relation between the inclination of the transverse groove and cornering performance.

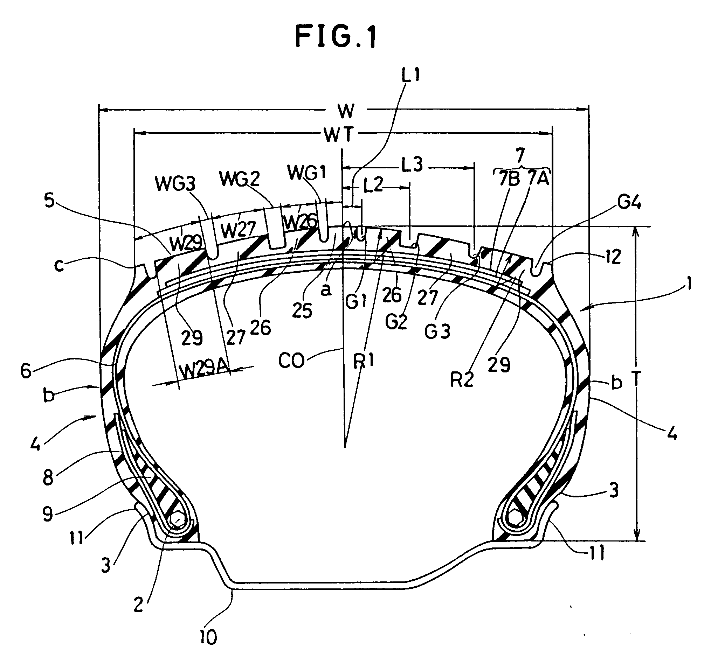

In Fig.1 a pneumatic tyre 1 has two bead portions 3, two sidewall portions 4, and a tread portion 5, and comprises a pair of bead cores 2 disposed in the bead portions, a carcass 6 turned up around the bead cores 2 from the inside to the outside, tread rubber and sidewall rubber on the carcass. The tread is reinforced by a belt 7 between the carcass 6 and the tread rubber, and bead apexes 9 are provided between the main body of the carcass 6 and its turned up parts.

The tyre 1 is mounted on a rim 10 having flanges 11.

The carcass 6 has one to three plies of cords arranged radially at angles of about 80 to 90 degrees to the tyre equatorial plane C0. For the cords, steel cords or fibre cords made of nylon, polyester, rayon or aromatic polyamide are employed.

The belt 7 comprises two plies of metallic cords, a radially inner first ply 7A and a radially outer second ply 7B. The cords of each ply are arranged at a relatively small angle to the tyre equator so as to incline in the opposite direction to that of the adjacent ply. For the belt cords, fibre cords, may also be employed.

In this embodiment, the first ply 7A is wider than the second ply 7B and the both ends of the first ply 7A are extended beneath the tread edge portions.

Each bead portion 3 is provided with a reinforcing layer 8 composed of at least one ply of metallic cords or appropriate fibre cords, and the layer 8 is disposed axially outside the carcass turn up and extends radially outward by from a position radially inside the bead core 2 beyond the radially outer ends of the bead apex 9 and the carcass turn up.

The tyre 1 is formed as a low aspect tyre with an aspect ratio T/W 0.7 or less, in this embodiment 0.65. The aspect ratio is the ratio of the sectional height T of the tyre which is the distance of a point (a) at the maximum height of the tread surface 12 from a base line passing through the radially inward end of the bead portions 3 in the tyre axial direction, to the tyre width W which is the distance between the points (b) of maximum width of the tyre when inflated to its standard internal pressure on its rim 10.

The tread surface 12 comprises in this embodiment, an internal arc portion with a radius of curvature R1 forming the centre portion thereof and two external arc portions with a radius of curvature R2 forming two portions thereof in the shoulder region.

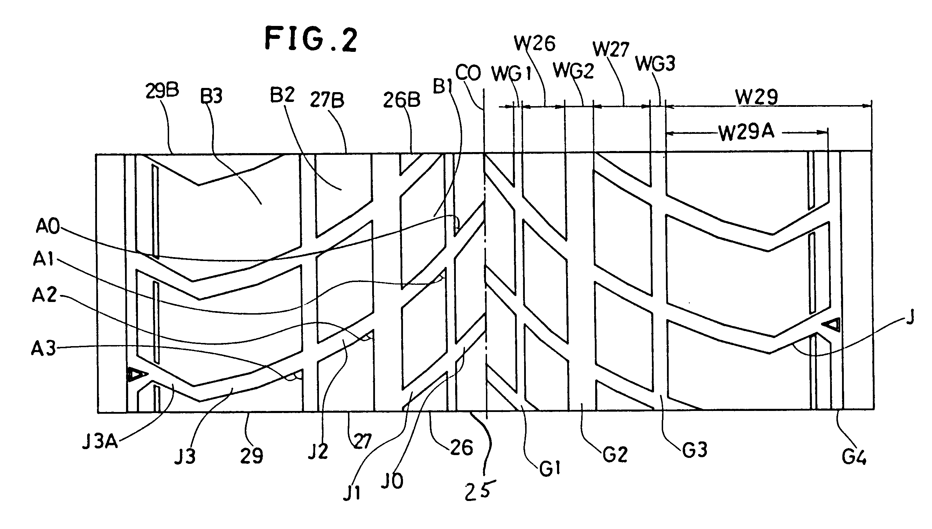

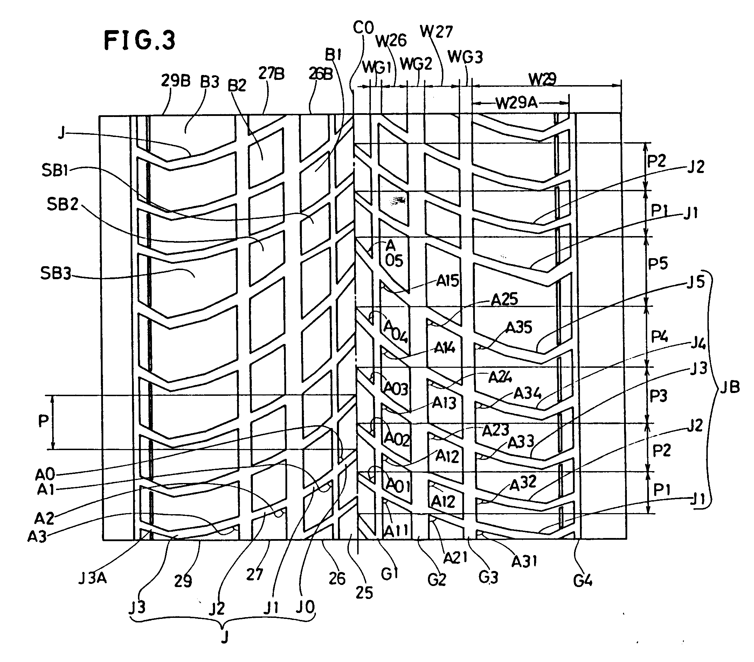

As shown in Figs 2 and 3, the tread portions 5 is provided with six longitudinal grooves, two first longitudinal grooves G1, two second longitudinal grooves G2 and two third longitudinal grooves G3.

The first longitudinal grooves G1 are straight grooves extending circumferentially on both sides of the tyre equator CO and parallel to the tyre equator CO, and the grooves are located at a distance L1 in a range larger than 0.05 times the tread width WT and smaller than 0.15 times thereof from the tyre equator, so that a central rib 25 extending along the tyre equator CO is formed between the first longitudinal groove G1.

The second longitudinal grooves G2 are formed outside the first longitudinal grooves G1 in the axial direction of the tyre. The second longitudinal grooves G2 are also straight grooves extending circumferentially and parallel to the tyre equator CO, and the second longitudinal grooves G2 are located at a distance L2 in a range larger than 0.3 times the tread width WT and smaller than 0.4 times thereof from the tyre equator CO, so that internal rib-like portions 26 are formed with the above mentioned first longitudinal grooves G1.

The third longitudinal grooves G3 are straight grooves extending circumferentially and parallel to the tyre equator outside the second longitudinal grooves G2 in the axial direction of the tyre, thereby forming intermediate rib like portions 27 with the above mentioned second longitudinal grooves G2, and also forming external rib like portions 29 with the outer edges (c) of the above mentioned tread portion 5. The third longitudinal grooves G3 are located at a distance L3 in a range larger than 0.6 times the tread width WT and smaller than 0.7 times thereof from the tyre equator CO.

Here, in the two embodiments shown in Figs.2 and 3, the tread portion is provided in the edge portions with two sub grooves G4 extending circumferentially and parallel to the tyre equator.

In addition, the width WG1 of the first longitudinal grooves G1 is greater than 0.03 times the tread width WT and less than 0.05 times; the width WG2 of the second longitudinal grooves G2 is greater than 0.09 times the tread width WT and less than 0.13 times; and the width WG3 of the third longitudinal grooves G3 is greater than 0.06 times the tread width WT and less than 0.10 times the tread width WT. As a result, the width WG3 is larger than the width WG1. And the width WG2 is set larger than the width WG3. (WG2>WG3>WG1).

By forming the longitudinal grooves G1 to G3 with these distances L1 to L3 and grooves widths wG1 to WG3, the width W26 of the internal rib like portions 26 is made smaller than the width W27 of the intermediate rib like portion 27, the width W27 is made smaller than the width of the external rib like portions 29 and simultaneously smaller than the width W29A between the third longitudinal groove G3 and the above mentioned sub groove G4.

Moreover, the tread portion 5 is, as shown in Figs 2 and 3, provided with transverse grooves J extending continuously from the first longitudinal groove G1 beyond the third longitudinal groove G3 to the sub groove G4. Each transverse groove J extends axially inwardly beyond the first longitudinal groove, and the extending portion JO in the centre rib 25 is terminated at the tyre equator CO.

As the transverse grooves J extend from the first longitudinal groove G1 to the sub groove G3, each internal rib like portion 26 is divided into a row 26B of internal blocks B1 by the internal portions J1 thereof passing through the portion 26, each intermediate rib like portion 27 is divided into a row 27B of intermediate blocks B2 by the intermediate portions J2 thereof passing through the portion 27, and each external rib like portion 29 is divided into a row 29B of external blocks B3 by the external portions J3 thereof intersecting the third longitudinal groove G3 toward the sub groove G4.

In each transverse groove J, the angle AO at which the extended portion JO intersects the first longitudinal groove G1 is smaller than the angle A1 at which the internal portion J1 intersects the first longitudinal groove G1 this angle A1 is smaller than the angle A2 at which the intermediate portion J2 intersects the second longitudinal groove G2 and this angle A2 is smaller than the angle A3 at which the external portion J3 intersects the third longitudinal groove G3, that is, (AO<A1<A2<A3).

Accordingly, each transverse groove J is formed so that the angles formed with the longitudinal grooves G1 to G3 gradually increase axially outwardly from the tyre equator CO.

Additionally each slant transverse groove J is provided with a reversely inclined short portion J3A on the sub groove side.

Fig.2 shows an embodiment of the present invention wherein the above mentioned transverse grooves are arranged at a constant pitch P in the circumferential direction of the tyre, and the transverse grooves on the right side of the tyre equator CO are circumferentially shifted to those on the left side thereof by a half pitch P/2.

In Fig 2, the angles AO, A1, A2 and A3 are the same in all transverse grooves and set as follows:
the difference A1-AO is more than 5 degrees and smaller than 15 degrees
the differences A2-A1 is more than 5 degrees and smaller than 15 degrees
the differences A3-A2 is more than 0 degrees and smaller than 15 degrees
the angles A0 is more than 35 degrees and smaller than 55 degrees
the angles A1 is more than 45 degrees and smaller than 65 degrees
the angles A2 is more than 55 degrees and smaller than 75 degrees and
the angles A3 is more than 60 degrees and smaller than 80 degrees
As mentioned above, the widths W26, W27, and W29 of the rib like portions 26, 27 and 29 satisfy the relation W26<W27<W29. As a result, the areas SB1, SB2 and SB3 of the blocks B1, B2 and B3 on the tread surface 12 satisfy the relation SB1<SB2<SB3, that is, the blocks B1 to B3 increase their surface areas SB1 to SB3 from inside to outside in the axial direction of the tyre.

In order to enhance the wet performance, it is important to improve resistance to the aquaplaning hydroplane phenomenon.

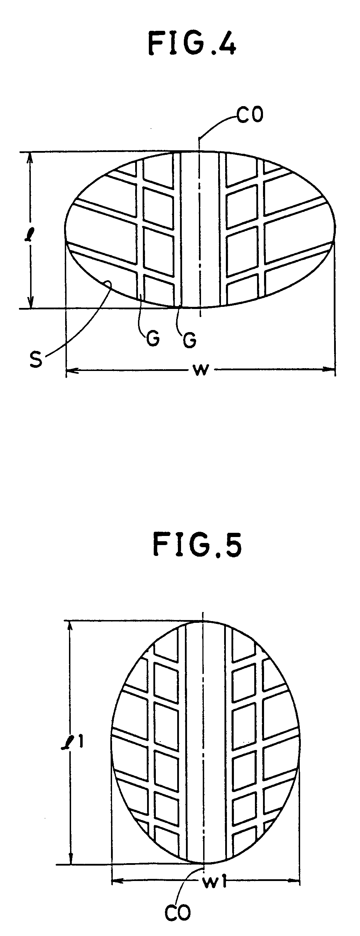

In a low aspect ratio tyre, as shown in Fig.4, the ground contact surface S becomes transversely wide with the ground contact width W in the axial direction of the tyre longer than the ground contact length ℓ in the circumferential direction of the tyre. To the contrary in a tyre having a high aspect ratio as shown in Fig.5, the ground contact surface becomes longitudinally long where the ground contact length ℓ1 is greater in comparison with the ground contact width w1.

As a consequence, in order to improve the water clearing performance of the ground contact surface S to increase aquaplaning resistance in a low aspect ratio tyre, it is effective to form longitudinal grooves g extending in the circumferential direction. For that purpose, in the pneumatic tyre 1, as shown in Figs.2 and 3, six longitudinal grooves G1 to G3 of first to third ones are formed in the linear direction of the tread. The water clearing performance in the axial direction of the tyre is enhanced by making the transverse grooves J to connect these longitudinal grooves G1 to G3.

Furthermore, the extending portion JO into the centre rib 25 improves the water cutting performance, and the water clearing performance of the centre rib 25 is upgraded so as to raise the wet performance.

As for dry performance, in order to enhance stability in straight running, it is preferable to increase the stiffness at the crown portion.

Accordingly, the circumferentially continuous centre rib 25 along the tyre equator CO has an offset or shift of the transverse grooves JO on one side of the tyre equator to those on the other side.

When turning the car and then adding slip angles to the tyre the tread portion 5 is subjected to a bending deformation.

As a result, the ground contact pressure at the shoulder portion located outside with respect to the turn becomes large and compressive bending deformation is effected on that portion. In order to endure such bending deformations in turning, it necessary to raise the stiffness at the shoulder portions. Therefore, by setting the angle A0 to A3 at which the transverse groove J intersects the longitudinal grooves G1 to G3 as to become larger towards the shoulder the blocks B3 at the shoulder portions are brought closer to rectangular shapes, and hence the stiffness in the shoulder portions is increased.

Furthermore, preferable results can be obtained by setting the angles differences A1-A0, A2-A1, A3-A2 in the above-mentioned ranges.

The stiffness at the shoulder portions is also increased by setting the above-mentioned surface areas SB1 and SB3 of the blocks B1 to B3 as to be larger toward the shoulder.

By the fact that the angles A0 to A3 of the transverse grooves become larger in the shoulder of the tyre and smaller in the crown portions, the water or clearing power of the crown portion is enhanced, and furthermore by the fact that the angle in the shoulder portion becomes large, the drainage towards the outer edge of the tyre is improved.

The above mentioned positions L1 to L3 and the widths WG1 to WG3 of the first to third longitudinal grooves G1 to G3 were proved by the following test to satisfy both wet performance and dry performance.

### Anti Aquaplaning Test

By driving a car equipped with test tyres on a wet road with a standing water thickness of 8mm, the maximum speed that can be obtained when only the front wheels are locked and the deceleration ratio becomes 0.15G is regarded as the aquaplaning initiating speed.

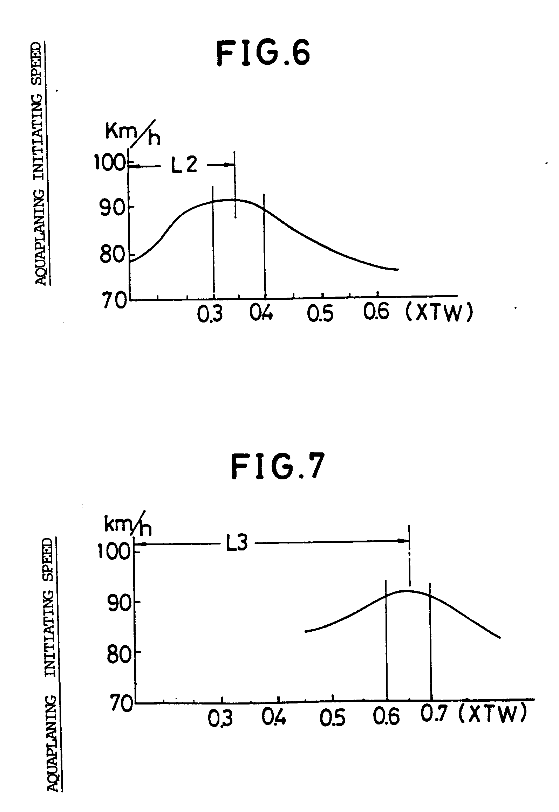

The position L2 of the second longitudinal groove G2, in Fig.6 where the axis of the ordinates indicates the aquaplaning initiating speed and the axis of the abscissa denotes the range with regard to the tread width WT, it is found preferable that the second longitudinal groove G2 is set in a range greater than 0.3 times the tread width WT and less than 0.4 times thereof from the tyre equator CO because the above mentioned speed becomes the largest.

Likewise, it is shown from Fig.7 that the anti-aquaplaning performance is superior when the third longitudinal groove G3 is a distance L3 larger than 0.6 times and smaller than 0.7 times the tread width WT.

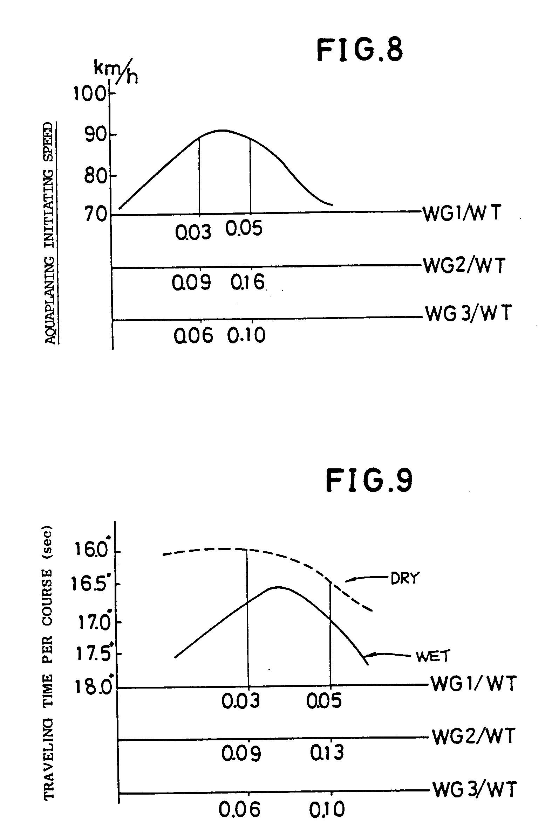

From the test results, it is known that the anti-aquaplaning performance is excellent when the width WG2 of the second groove G2 is greater than the width WG3 of the third longitudinal groove G3 and the width G3 is greater than the width WG1 of the first longitudinal groove G1. Then as shown in Fig. 8, similar tests were executed by simultaneously changing the widths of the longitudinal grooves G1 to G3 for which the results show that when the groove widths WG1 to WG3 are respectively in the ranges described above, the limit speed of initiating aquaplaning phenomenon reached its peak so that the wet performance becomes best.

Here, in Fig.8, the axis of the abscissa indicates the ratio between the widths G1 to G3 and the tread width WT.

### Cornering Test

By driving on a circular course with a radius of 50m, the maximum travelling time per course was measured until the car moved by the slip of the tyres due to the centrifugal force and the results are shown in Fig.9.

In Fig.9, the broken line indicates the case on a dry road surface, and a solid line denotes the case on a wet road surface where water was stagnant at a thickness of 3mm. The peak similarly appeared in the above mentioned range.

As known from above, when the groove widths WG1 to WG3 are too narrow, the groove volumes become so small as to spoil the wet performance. In contrast, when they are too large, the frictional force with the road surface is reduced so as to impair the wet performance. In addition, when the groove widths WG1 to WG3 are too large, it is found that the dry performance is lessened and therefore the groove positions L1 to L3 and the groove widths WG1 to WG3 are preferably set in the above mentioned ranges.

The above mentioned angles A0 to A3 of the transverse groove J are also set in their most preferable ranges from the test results.

Fig.3 shows another embodiment of the present invention wherein the tread portion is provided with transverse grooves of several kinds with regard to inclination thereof and those transverse slant grooves are arranged at different pitches.

In this embodiment, the tread portion 5 is provided with five kinds of transverse grooves J1, J2, J3, J4 and J5, wherein the inclination thereof, as a whole decrease in that order. Accordingly, each kind of transverse groove has a different set of angles from those of another of the transverse grooves, that is, upon the assumption that number i is smaller than number j the angles A0i to A3i of one kind of the transverse groove Ji are greater than the angles A0j to A3j of the adjacent kind of the transverse groove Jj, respectively, that is, A0i>A0j, A1i>A1j, A2i>A2j and A3i>A3j and more concretely, for example, in the case of J1 and J2, A01>A02, A11>A12, A21>A22 and A31>A32.

The angles A0i, A1i, A2i and A3i of each type of transverse groove Ji (wherein i=1,2,3,4 or 5) has to satisfy the following relations:-
the difference A1i-A0i is more than 5 degrees and smaller than 15 degrees and more preferably 10 degrees
the differences A2i-A1i is more than 5 degrees and smaller than 15 degrees and more preferably 10 degrees
the differences A3i-A2i is more than 0 degree and smaller than 10 degrees and more preferably 5 degrees
the angle A0i is more than 35 degrees and smaller than 55 degrees and more preferably more than 40 degrees and smaller than 50 degrees
the angle A1i is more than 45 degrees and smaller than 65 degrees and more preferably more than 50 degrees and smaller than 60 degrees
the angle A2i is more than 55 degrees and smaller than 75 degrees and more preferably more than 50 degrees and smaller than 70 degrees and
the angle A3i is more than 60 degrees and smaller than 80 degrees and more preferably more than 65 degrees and smaller than 75 degrees.

An example of such angle arrangements is shown in Table 1, wherein the differences A1i-A0i and A2i-A1i are set to be 10 degrees and the difference A3i-A2i is set to be 5 degrees.

**Table 1**

| (degrees) | | | | | |
|---|---|---|---|---|---|
| | J1 | J2 | J3 | J4 | J5 |
| A0 | A01=50 | A02=47 | A03=45 | A04=42 | A05=40 |
| A1 | A11=60 | A12=57 | A13=55 | A14=52 | A15=50 |
| A2 | A21=70 | A22=67 | A23=65 | A24=62 | A25=60 |
| A3 | A31=75 | A32=72 | A33=70 | A34=67 | A35=65 |

Furthermore, in this embodiment the pitch of a transverse groove is defined as the distance on the tyre equator CO between the transverse groove and next transverse groove located on the acute angle side, that is, the side of the transverse groove on which the acute one of the angles formed by the transverse groove and the tyre equator on both sides of the transverse groove is located. The greater the inclination of the transverse groove is, the smaller the circumferential pitch is.

The tread pattern is formed by repeating a groove unit JB composed of the above mentioned five kinds of five transverse grooves J1, J2, J3, J4 and J5 arranged in that order, that is, descending order of the inclinations or in ascending order of the circumferential pitches.

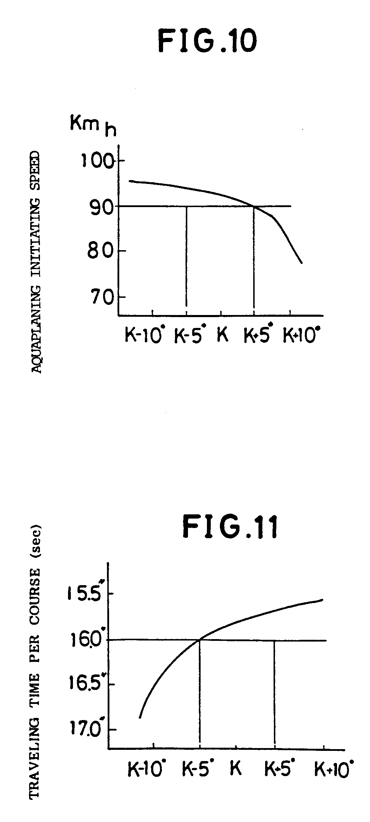

Fig.10 shows the relation between the inclinations of the transverse grooves and anti-aquaplaning performance.

Fig.11 shows the relation between the inclinations of the transverse grooves and cornering performance when run on a dry circular course with a radius of 50m.

In Figs.10 and 11, "K" on the axis of the abscissa expresses a reference condition in the inclinations of the transverse grooves wherein the angles A1 to A3 are set as shown in Table 1 satisfying the following relations the angle differences A1-A0 and A2-A1 are 10 degrees, and A3, A2 is 5 degrees, and "K-10", "K-5", "K+5, "K+10" express all angles on "K", minus 10 deg, minus 5 deg, plus 5 deg, plus 10 deg.

Fig 10 shows that the aquaplaning initiating speed reduces as the angles are increased but to the contrary, Fig.11 proves that the turning speed is increased and as a result, it is found out that both wet performance and dry performance can be satisfied by adding or subtracting 5 degrees to or from the above mentioned K.

Besides, by employing transverse grooves Ji having different inclinations a periodicity is given to the blocks. And hence, so called pitch variations effects which contribute to the generation of white noise, elimination of periodicity of drain, enhancement of water cutting effects and improvements of anti-aquaplaning performance.

In addition, as another embodiment of the present invention, the above mentioned extending portion Jo, internal portion J1, intermediate portion J2 and external portion J3 can be formed by curved grooves, and the above mentioned angles A0 to A3 are, at this time, defined as angles formed by the longitudinal grooves G1 to G3 and tangents contacting the portions J0 to J3 at intersections between the portions J0 to J3 and longitudinal grooves G1 to G3 respectively.

As described above, the present invention wherein the tread portion is provided with six longitudinal grooves parallel to the tyre equator and transverse grooves for which intersection angles to the tyre equator are set so as to be larger toward the shoulder, can provide a low aspect ratio pneumatic tyre having superior linear performance and turning performance on a dry road surface, an improved anti-aquaplaning performance on wet road surface, which is well balanced and which can satisfy both dry performance and wet performance requirements in the same tyre.

## Claims

1. A pneumatic tyre having an aspect ratio of 0.7 or less and a tread provided with three longitudinal grooves (G1,G2,G3) and transverse grooves (J) on either side of the tyre equator (CO), said transverse grooves being arranged in the circumferential direction of the tyre, said six longitudinal grooves (G1,G2,G3) extending circumferentially and parallel to the tyre equator (CO) and including first (G1), second (G2) and third (G3) longitudinal grooves arranged axially outwardly in that order from the tyre equator (CO), on either side each transverse groove extending continuously from axially inward of said first longitudinal groove (G1) toward and beyond said third longitudinal groove (G3) and having an extending portion (J0) up to the first longitudinal groove (G1), an internal portion (J1) between said first and second longitudinal grooves (G1,G2), and intermediate portion (J2) between said second and third longitudinal grooves (G2,G3) and an external portion (J3) between said third longitudinal groove (G3) and the edge of said tread, so as to form, on either side of the tyre equator (C0), a row of internal blocks (B1) between said first and second longitudinal grooves (G1,G2), a row of intermediate blocks (B2) between said second and third longitudinal grooves (G2,G3), and a row of external blocks (B3) between said third longitudinal groove (G3) and the edge of said tread, each transverse groove (J) being inclined with respect to the tyre equator (C0), and the angle (A2) between said intermediate portion (J2) and said second longitudinal groove (G2) being larger than the angle (A1) between said internal portion (J1) and said first longitudinal groove (G1) and smaller than the angle (A3) between said external portion (J3) and said third longitudinal groove (G3), and the angle (A0) between the extending portion (J0) and the first longitudinal groove (G1) being smaller than said angle (A1), characterised in that the transverse grooves (J) form groups (JB) in which the inclinations of a groove (JBi) are different from those of any other groove (JBj) of that group, and the angles (A0i,A1i,A2i,A3i) formed by the portions (J0i,J1i,J2i,J3i) of a transverse groove (Ji) are larger than the respective angles (A0j,A1j,A2j,A3j) of the next ranked groove (JBj) having smaller inclinations and smaller than the respective angles of the previous ranked groove having larger inclinations of that group, if any.

2. A pneumatic tyre according to claim 1, characterised in that the difference A1-A0 is larger than 5 degrees and smaller than 15 degrees, the difference A2-A1 is larger than 5 degrees and smaller than 15 degrees, and the difference A3-A2 is larger than 0 degrees and smaller than 10 degrees.

3. A pneumatic tyre according to claim 1 or claim 2, characterised by its said angle A0 being larger than 35 degrees and smaller than 55 degrees, angle A1 being larger than 45 degrees and smaller than 65 degrees, angle A2 being larger than 55 degrees and smaller than 75 degrees, and angle A3 being larger than 60 degrees and smaller than 80 degrees.

4. A pneumatic tyre according to claim 1, characterised in that between two adjacent transverse grooves, the surface area (SB2) of the intermediate block (B2) is larger than the surface area (SB1) of the internal block (B1) and smaller than the surface area (SB3) of the external block (B3).

5. A pneumatic tyre according to claim 4, characterised in that the groove width (WG3) of said third longitudinal groove (G3) is larger than the groove width (WG1) of said first longitudinal groove (G1) and smaller than the groove width (WB2) of said second longitudinal groove (G2).

6. A pneumatic tyre according to claim 4 or claim 5, characterised in that the distance of each second longitudinal groove (G2) from the tyre equator (CO) is larger than 0.3 and smaller than 0.4 times the tread width (WT).

7. A pneumatic tyre according to claim 4 or claim 5, characterised in that the distance of each third longitudinal groove (G3) from the tyre equator (CO) is larger than 0.6 and smaller than 0.7 times the tread width (WT).

## Patentansprüche

1. Luftreifen mit einem Querschnittsverhältnis von 0,7 oder weniger und einem Laufstreifen, der mit drei Längsnuten (G1, G2, G3) und Quernuten (J) an jeder Seite des Reifenäquators (CO) versehen ist, wobei die Quernuten in der Umfangsrichtung des Reifens angeordnet sind, die sechs Längsnuten (G1, G2, G3) sich in Umfangsrichtung und parallel zum Reifenäquator (CO) erstrecken und erste (G1), zweite (G2) und dritte (G3) Längsnuten enthalten, die in dieser Reihenfolge vom Reifenäquator (CO) an axial nach außen angeordnet sind und an beiden Seiten jede Quernut sich kontinuierlich von axial innerhalb der ersten Längsnut (G1) zu der dritten Längsnut (G3) und über sie hinaus erstreckt und einen Erstreckungsabschnitt (JO) über die erste Längsnut (G1) hinaus besitzt, einen inneren Abschnitt (J1) zwischen der ersten und der zweiten Längsnut (G1, G2) und einen Zwischenabschnitt (J2) zwischen der zweiten und der dritten Längsnut (G2, G3) und einen Außenabschnitt (J3) zwischen der dritten Längsnut (G3) und der Kante des Laufstreifens, um so an beiden Seiten des Reifenäquators (CO) eine Reihe von inneren Blöcken (B1) zwischen der ersten und der zweiten Längsnut (G1, G2), eine Reihe von Zwischenblöcken (B2) zwischen der zweiten und der dritten Längsnut (G2, G3) und eine Reihe von Außenblöcken (B3) zwischen der dritten Längsnut (G3) und der Kante des Laufstreifens zu bilden, wobei jede Quernut (J) bezüglich des Reifenäquators (CO) geneigt ist und der Winkel (A2) zwischen dem Zwischenabschnitt (J2) und der zweiten Längsnut (G2) größer als der Winkel (A1) zwischen dem Innenabschnitt (J1) und der ersten Längsnut (G1) und kleiner als der Winkel (A3) zwischen dem Außenabschnitt (J3) und der dritten Längsnut (G3) ist und der Winkel (A0) zwischen dem Erstreckungsabschnitt (J0) und der ersten Längsnut (G1) kleiner als der Winkel (A1) ist, dadurch gekennzeichnet, daß die Quernuten (J) Gruppen (JB) bilden, in denen die Neigungen einer Nut (JBi) unterschiedlich von denen jeder anderen Nut (JBj) der Gruppe sind, und die Winkel (A0i, A1i, A2i, A3i), die durch die Abschnitte (J0i, J1i, J2i, J3i) einer Quernut (Ji) gebildet sind, größer als die jeweiligen Winkel (A0j, A1j, A2j, A3j) der nächstgeordneten Nut (JBj) sind mit kleineren Neigungen und kleiner als die jeweiligen Winkel der vorher eingeordneten Nut mit größeren Neigungen der Gruppe sind, falls vorhanden.

2. Luftreifen nach Anspruch 1, dadurch gekennzeichnet, daß die Differenz A1-A0 größer als 5° und kleiner als 15° ist, die Differenz A2-A1 größer als 5° und kleiner als 15° ist und die Differenz A3-A2 größer als 0° und kleiner als 10° ist.

3. Luftreifen nach Anspruch 1 oder 2, dadurch gekennzeichnet, daß der Winkel A0 größer als 35° und kleiner als 55° ist, der Winkel A1 größer als 45° und kleiner als 65° ist, der Winkel A2 größer als 55° und kleiner als 75° ist und der Winkel A3 größer als 60° und kleiner als 80° ist.

4. Luftreifen nach Anspruch 1, dadurch gekennzeichnet, daß zwischen zwei benachbarten Quernuten die Flächengröße (SB2) des Zwischenblocks (B2) größer als die Flächengröße (SB1) des inneren Blocks (B1) und kleiner als die Oberfläche (SB3) des äußeren Blocks (B3) ist.

5. Luftreifen nach Anspruch 4, dadurch gekennzeichnet, daß die Nutbreite (WG3) der dritten Längsnut (G3) größer als die Nutbreite (WG1) der ersten Längsnut (G1) und kleiner als die Nutbreite (WB2) der zweiten Längsnut (G2) ist.

6. Luftreifen nach Anspruch 4 oder 5, dadurch gekennzeichnet, daß der Abstand jeder zweiten Längsnut (G2) von dem Reifenäquator (CO) größer als das 0,3-Fache und kleiner als das 0,4-fache der Laufstreifenbreite (WT) ist.

7. Luftreifen nach Anspruch 4 oder 5, dadurch gekennzeichnet, daß der Abstand jeder dritten Längsnut (G3) von dem Reifenäquator (CO) größer als das 0,6-fache und kleiner als das 0,7-fache der Laufstreifenbreite (WT) ist.

## Revendications

1. Pneumatique ayant un rapport d'allongement inférieur ou égal à 0,7 et une bande de roulement ayant trois gorges longitudinales (G1, G2, G3) et des gorges transversales (J) de part et d'autre de l'équateur (CO) du pneumatique, les gorges transversales étant disposées dans la direction circonférentielle du pneumatique, les six gorges longitudinales (G1, G2, G3) étant disposées circonférentiellement et parallèlement à l'équateur (CO) du pneumatique et comprenant des premières (G1), des secondes (G2) et des troisièmes (G3) gorges longitudinales disposées axialement vers l'extérieur dans cet ordre depuis l'équateur (CO) du pneumatique, de part et d'autre, chaque gorge transversale étant disposée de façon continue d'une partie placée axialement vers l'intérieur de la première gorge longitudinale (G1) vers la troisième gorge longitudinale (G3) et au-delà et ayant une partie de prolongement (J0) allant jusqu'à la première gorge longitudinale (G1), une partie interne (J1) comprise entre les première et seconde gorges longitudinales (G1, G2), une partie intermédiaire (J2) comprise entre les seconde et troisième gorges longitudinales (G2, G3) et une partie externe (J3) comprise entre la troisième gorge longitudinale (G3) et le bord de la bande de roulement afin que, de part et d'autre de l'équateur (CO) du pneumatique, une ligne de blocs internes (B1) soit formée entre les première et seconde gorges longitudinales (G1, G2), une ligne de blocs intermédiaires (B2) soit formée entre les seconde et troisième gorges longitudinales (G2, G3), et une ligne de blocs externes (B3) soit formée entre la troisième gorge longitudinale (G3) et le bord de la bande de roulement, chaque gorge transversale (J) étant inclinée par rapport à l'équateur (CO) du pneumatique, et l'angle (A2) de la partie intermédiaire (J2) et de la seconde gorge longitudinale (G2) est supérieur à l'angle (A1) de la partie interne (J1) et de la première gorge longitudinale (G1) et inférieur à l'angle (A3) de la partie externe (J3) et de la troisième gorge longitudinale (G3), et l'angle (A0) de la partie de prolongement (J0) et de la première gorge longitudinale (G1) est inférieur à l'angle (A1), caractérisé en ce que les gorges transversales (J) forment des groupes (JB) dans lesquels les inclinaisons d'une gorge (JBi) sont différentes de celles de toute autre gorge (JBj) de ce groupe, et les angles (A0i, A1i, A2i, A3i) formés par les parties (J0i, J1i, J2i, J3i) d'une gorge transversale (Ji) sont supérieurs aux angles respectifs (A0j, A1j, A2j, A3j) de la gorge du rang suivant (JBj) ayant des inclinaisons plus petites et inférieurs aux angles respectifs de la gorge du rang précédent ayant de plus grandes inclinaisons dans ce groupe, le cas échéant.

2. Pneumatique selon la revendication 1, caractérisé en ce que la différence A1 - A0 est comprise entre 5 et 15°, la différence A2 - A1 est comprise entre 5 et 15°, et la différence A3 - A2 est comprise entre 0 et 10°.

3. Pneumatique selon la revendication 1 ou 2, caractérisé en ce que l'angle A0 est compris entre 35 et 55°, l'angle A1 est compris entre 45 et 65°, l'angle A2 est compris entre 55 et 75°, et l'angle A3 est compris entre 60 et 80°.

4. Pneumatique selon la revendication 1, caractérisé en ce que, entre deux gorges transversales adjacentes, la surface (SB2) du bloc intermédiaire (B2) est supérieure à la surface (SB1) du bloc interne (B1) et inférieure à la surface (SB3) du bloc externe (B3).

5. Pneumatique selon la revendication 4, caractérisé en ce que la largeur (WG3) de la troisième gorge longitudinale (G3) est supérieure à la largeur (WG1) de la première gorge longitudinale (G1) et inférieure à la largeur (WG2) de la seconde gorge longitudinale (G2).

6. Pneumatique selon la revendication 4 ou 5, caractérisé en ce que la distance de chaque seconde gorge longitudinale (G2) à l'équateur (CO) est comprise entre 0,3 et 0,4 fois la largeur (WT) de la bande de roulement.

7. Pneumatique selon la revendication 4 ou 5, caractérisé en ce que la distance de chaque troisième gorge longitudinale (G3) à l'équateur (CO) du pneumatique est comprise entre 0,6 et 0,7 fois la largeur (WT) de la bande de roulement.
